Europäisches Patentamt

European Patent Office

Office européen des brevets

(19)

(11) Veröffentlichungsnummer: **0 179 147 B1**

(12) **EUROPÄISCHE PATENTSCHRIFT**

(45) Veröffentlichungstag der Patentschrift:
06.09.89

(21) Anmeldenummer: 85902442.4

(22) Anmeldetag: 03.05.85

(86) Internationale Anmeldenummer:
PCT/DE 85/00141

(87) Internationale Veröffentlichungsnummer:
WO 85/05201 (21.11.85 Gazette 85/25)

(51) Int. Cl.⁴: **G 06 F 3/023, G 09 G 1/16**

(54) **ANORDNUNG ZUM VERSCHIEBEN VON ZEICHEN AUF DEM BILDSCHIRM EINES SICHTGERÄTES.**

(30) Priorität: 07.05.84 DE 3416806

(43) Veröffentlichungstag der Anmeldung:
30.04.86 Patentblatt 86/18

(45) Bekanntmachung des Hinweises auf die Patenterteilung:
06.09.89 Patentblatt 89/36

(84) Benannte Vertragsstaaten:
DE FR GB SE

(56) Entgegenhaltungen:
DE-A- 3 103 434
GB-A- 2 070 399
GB-A- 2 087 696
GB-A- 2 139 762
US-A- 3 576 574
US-A- 3 673 327

Patents Abstracts of Japan, vol. 6, no. 206,
(P-149)(1084), 19 October 1982
Information processing 80 Proceedings of IFIP
Congress 80, Tokyo (JP), 6-9 October 1980, Melbourne
(AU), 14-17 October 1980, North-Holland Pub.Co., New
York (US), C.F. Herot: "A Spatial Graphical
Man.Machine Interface", p. 1041-1042
IBM Technical Disclosure Bulletin, vol. 26, no. 1, June
1983 (Armonk, US), H. Halliwell: "Continuous Angle &
Distance Graphics Display", p. 182-183

(73) Patentinhaber: Siemens Aktiengesellschaft,
Wittelsbacherplatz 2, D-8000 München 2 (DE)

(72) Erfinder: CHARWAT, Hansjürgen, Kärcherstr. 46,
D-7500 Karlsruhe 21 (DE)
Erfinder: FÖRSTER, Egon, Hertzstr. 8,
D-6729 Wörth-Maximiliansau (DE)

## Beschreibung

Die Erfindung bezieht sich auf eine Anordnung zum Verschieben von Zeichen auf dem Bildschirm eines Sichtgerätes gemäss dem Oberbegriff des Anspruchs 1.

Übersichtsbilder von Anlagen, z.B. der Energieerzeugung oder Verteilung, werden häufig mit Sichtgeräten wiedergegeben. Eine gleichzeitige detaillierte Darstellung der gesamten Anlage ist in der Regel nicht möglich und aus Gründen der Übersichtlichkeit auch nicht erwünscht. Wie in der DE-PS 2 836 500 angegeben, kann man die Informationen, die für die Darstellung des gesamten Bildes, des sogenannten Grossbildes, erforderlich sind, in einem Bildspeicher hinterlegen und aus diesem nur einen Teil auslesen, so dass ein Ausschnitt aus dem Grossbild dargestellt wird. Im allgemeinen werden die aus dem Bildspeicher ausgelesenen Informationen nicht direkt in Videosignale umgewandelt, sondern in einem Bildwiederholungsspeicher zwischengespeichert, aus dem sie zyklisch synchron mit der Ablenkung des Elektronenstrahls der Bildröhre ausgelesen werden. Dieser Ausschnitt kann mit einem Bedienelement über das Grossbild verschoben werden; man bezeichnet diesen Vorgang auch als «Bildrollen». Als Bedienelemente werden hierfür Steuerknüppel, Rollkugeln und dergleichen eingesetzt, die getrennt vom Bildschirm angeordnet sind. Solch eine Anlage ist aus GB-A 2 070 399 bekannt. Zum Verschieben des Bildausschnittes muss der Steuerknüppel bzw. die Rollkugel in einer von der Bildschirmebene verschiedenen Ebene bewegt werden. Die Auslenkrichtung bzw. die Drehrichtung wird ermittelt und daraus werden die jeweils aufgerufenen Bildspeicheradressen so modifiziert, dass das gewünschte Bildrollen entsteht.

Die bekannten Anordnungen haben den Nachteil, dass die Ebene, in der das Bildelement bewegt wird, und die Bildschirmebene und damit die Bedienbewegung und die der Reaktion verschieden sind, so dass die Bedienung viel Erfahrung und grosse Konzentration verlangt. Der vorliegenden Erfindung liegt die Aufgabe zugrunde, eine Anordnung zum Verschieben von Zeichen zu schaffen, bei der die Bedienebene des Bedienelementes mit der Bildschirmebene übereinstimmt, so dass die Bedienung erleichtert wird.

Diese Aufgabe wird gemäss der vorliegenden Erfindung mit den im kennzeichnenden Teil des Anspruchs 1 angegebenen Massnahmen gelöst.

Vorzugsweise wird ein Bedienelement verwendet, das unmittelbar mit dem Finger oder mit einem Stift betätigt werden kann. Ein solches Bedienelement weist eine transparente berührungsempfindliche Platte auf, die vor dem Bildschirm angebracht ist. Sie besteht aus einer Scheibe, die am Bildschirm aufliegt, und einer über dieser mit Abstand angebrachten Folie. Scheibe und Folie sind jeweils mit einer leitenden Schicht versehen, derart, dass beim Berühren der Folie mit dem Finger oder einem Stift durch den dabei entstehenden leichten Druck die beiden leitenden Schichten kontaktieren. Es entstehen dadurch zwei Spannungsteiler in den beiden Koordinatenrichtungen, so dass die Koordinaten des Berührungspunktes in einem an die berührungsempfindliche Platte angeschlossenen Koordinatenauswertegerät ermittelt und als Digitalzahlen ausgegeben werden können. Es können auch Bedienelemente eingesetzt werden, bei denen an zwei Seiten des Bildschirmes Reihen von Strahlensendern, z.B. Lumineszenzdioden, angeordnet sind, die auf Reihen von Strahlungsempfängern gerichtet sind, die auf den jeweils gegenüberliegenden Bildschirmseiten angebracht sind. Beim Berühren des Bildschirmes werden mindestens zwei sich kreuzende Strahlen unterbrochen, woraus die Koordinaten des Berührungspunktes ermittelt werden können. Ein anderes Bedienelement, das prinzipiell ebenfalls geeignet ist, ist der sogenannte Lichtgriffel.

Bedienelemente der erwähnten Art, mit denen die Bildschirmkoordinaten des Berührungsortes ermittelt werden, werden zum Anwählen von Bildschirmfeldern, z.B. für virtuelle Tastaturen, verwendet. Gemäss der vorliegenden Erfindung werden sie auch zum Rollen von Bildern eingesetzt. Vorteilhaft können sie nach einer Weiterbildung der Erfindung in beiden Betriebsarten benutzt werden, indem die erste Betriebsart mit dem Auftreten von vorgegebenen Änderungen der Bildschirmkoordinaten und die zweite Betriebsart nach Auftreten von mehreren gleichen Bildschirmkoordinaten eingeschaltet wird. Dies bedeutet, dass die Betriebsart «Bildrollen» durch Überfahren des Bildschirmes mit einer Mindestgeschwindigkeit eingeschaltet und durchs Verharren an einem Punkt ausgeschaltet wird. Gleichzeitig wird die Betriebsart «Koordinatenanwahl» eingeschaltet. Bei einem nachfolgenden Berühren des Bildschirmes ohne Bewegung findet eine Koordinatenermittlung statt.

Die erfindungsgemässe Anordnung kann so ausgestaltet sein, dass das Bild nur dann gerollt wird, solange man mit dem Finger oder mit dem Stift über den Bildschirm fährt, und zwar in Richtung und mit der Geschwindigkeit der Handbewegung. Soll der Bildausschnitt über eine grössere Strecke des Grossbildes verschoben werden, kann es erwünscht sein, die Rollbewegung mit einer Handbewegung auf dem Bildschirm zu starten, indem Richtung und Geschwindigkeit der Handbewegung Rollrichtung und Geschwindigkeit angeben, dass aber dann die Rollbewegung selbsttätig abläuft und durch Berühren des Bildschirms gestoppt wird. Hierzu kann die erfindungsgemässe Anordnung so ausgestaltet sein, dass die jeweiligen Ausgangssignale der Koordinatenvergleichseinrichtung in einen Speicher eingetragen werden, aus dem sie zyklisch an die Adressiereinrichtung abgegeben werden, solange kein Koordinatensignal festgestellt wird. Wenn aber dann Koordinatensignale auftreten und diese sich während einer vorgegebenen Zeitdauer nicht ändern, also ihre Differenzen Null sind, wird das Verschieben des Bildausschnittes gestoppt. Die Handbewegung beim Bedienen und die damit veranlasste Bewegung des Bildes sind somit in ergonomisch günstiger Weise unmittelbar gekoppelt.

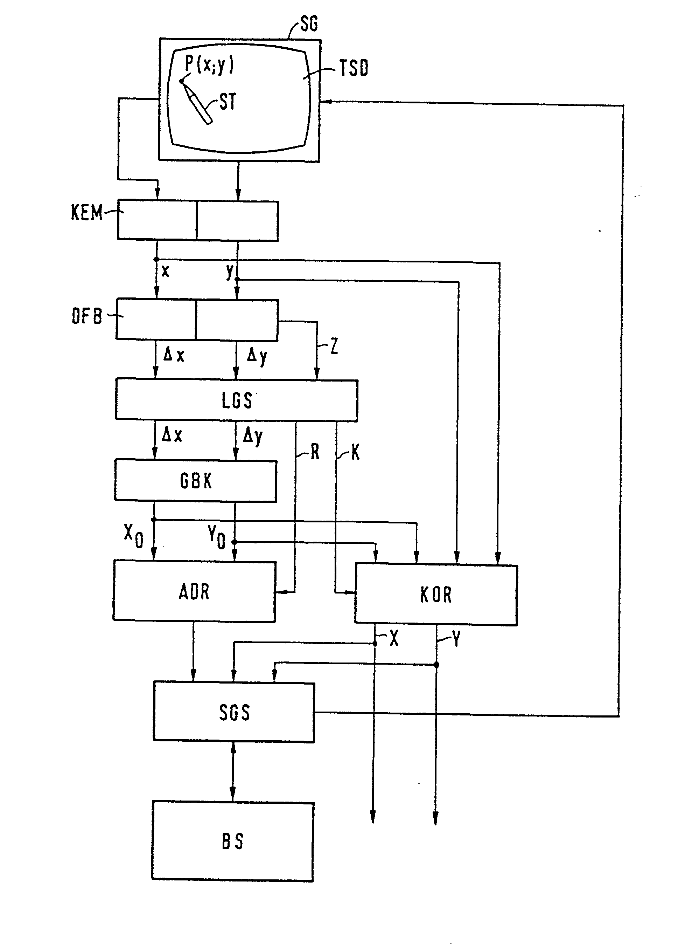

Anhand der Zeichnung, in der eine besonders vorteilhafte Ausführungsform der Erfindung schematisch dargestellt ist, werden im folgenden die Erfindung sowie weitere Vorteile und Ergänzungen näher beschrieben und erläutert.

Mit einem Sichtgerät SG sollen Ausschnitte aus einem Grossbild dargestellt werden, das in einem Bildspeicher BS enthalten ist. Eine Sichtgerätesteuerung SGS liest aus dem Speicher BS die für die Darstellung der Ausschnitte erforderlichen Informationen aus und überträgt sie in für die Ansteuerung des Sichtgerätes SG geeigneter Form zum Sichtgerät SG. Vor dem Bildschirm des Sichtgerätes SG ist eine berührungsempfindliche Platte TSD angebracht, die, wenn an einem Punkt P ein Stift ST oder ein Finger aufgesetzt wird, Signale abgibt, die von einer Koordinaten-Ermittlungseinheit KEM in Koordinaten $x$, $y$ umgesetzt werden, welche den Berührungspunkt P auf dem Bildschirm angeben. Ein Differenzenbildner DFB erzeugt aus den aufeinanderfolgenden Koordinaten Koordinatendifferenzen $\Delta x$, $\Delta y$, die einer Logik- und Speicherschaltung LGS zugeführt sind. Die Koordinaten $x$, $y$ bzw. die Differenzen $\Delta x$, $\Delta y$ werden in konstanten Zeitabständen gebildet, so dass, wenn der Stift über den Bildschirm geführt wird, die Grösse der Differenzen nicht nur die Richtung der Bewegung des Stiftes, sondern auch dessen Geschwindigkeit angeben. Statt dessen kann auch so verfahren werden, dass jede Koordinatenänderung um einen vorgegebenen Betrag und die Zeitdifferenz zwischen je zwei Koordinatenänderungen erfasst werden. Die Logik- und Speicherschaltung LGS speichert mindestens ein Differenzenpaar $\Delta x$, $\Delta y$, zweckmässig aber mehrere, und prüft, ob Differenzensignale vorhanden sind. Wird der Stift nur auf die berührungsempfindliche Platte TSD aufgesetzt, ohne bewegt zu werden, gibt die Koordinaten-Ermittlungseinheit KEM zwar Signale $x$, $y$ ab, die Differenzensignale $\Delta x$, $\Delta y$ sind aber Null. Wird der Stift über dem Bildschirm bewegt, ist mindestens einer der Differenzensignale $\Delta x$, $\Delta y$ ungleich Null. Wird der Stift von der Platte TSD abgenommen, verschwinden die Koordinatensignale $x$, $y$ und der Differenzenbildner DFB gibt über eine Leitung Z ein diesen Zustand kennzeichnendes Steuersignal auf die Logik- und Speicherschaltung LGS.

Aufgrund der vom Differenzenbildner DFB zugeführten Signale schaltet die Logik- und Speicherschaltung LGS die Anordnung entweder in den Betriebszustand «Bildrollen», in dem das Grossbild über den Bildschirm des Sichtgerätes SG bewegt wird, oder in den Betriebszustand «Koordinatenanwahl», bei dem die Grossbildkoordinaten des Bildschirmpunktes ermittelt werden, auf den der Stift aufgesetzt ist. Im ersten Fall gibt die Logik- und Steuerschaltung LGS über eine Leitung R ein Freigabesignal auf einen Adressenrechner ADR, im zweiten Fall über eine Leitung K auf einen Koordinatenrechner KOR.

Zwischen die Logik- und Speicherschaltung LGS und den Adressenrechner ADR ist eine Einheit GBK geschaltet, die aus den Koordinatendifferenzen $\Delta x$, $\Delta y$ Grossbildkoordinaten $X_0$, $Y_0$ errechnet, welche den jeweils gezeigten Ausschnitt aus dem Grossbild bestimmen. Diese Koordinaten geben z.B. den Punkt des Grossbildes an, der in der linken oberen Ecke des Bildschirmes dargestellt wird. Bei Eingang neuer Koordinatendifferenzen werden diese Grossbildkoordinaten verändert, so dass der Grossbildausschnitt verschoben wird. Der Adressenrechner ADR errechnet, ausgehend von den Grossbildkoordinaten $X_0$, $Y_0$, die Adressen der Bildspeicherzellen, in denen die für die Darstellung des Ausschnittes erforderlichen Daten enthalten sind. Der Koordinatenrechner KOR errechnet aus den Grossbildkoordinaten $X_0$, $Y_0$ und den Bildschirmkoordinaten $x$, $y$ Grossbildkoordinaten $X$, $Y$, die angeben, auf welchen Punkt des Grossbildes der Stift aufgesetzt ist. Mit diesen Koordinaten $X$, $Y$ können Funktionen, z.B. «Ventil öffnen» oder «Ventil schliessen», Abrufen von Informationen usf., sowohl ausserhalb der gezeigten Anordnung als auch innerhalb dieser Anordnung ausgelöst werden.

Im folgenden wird die Betriebsweise der beschriebenen Anordnung näher erläutert. Es wird angenommen, dass die berührungsempfindliche Platte TSD nicht berührt wird, also die Einheit KEM keine Koordinaten $x$, $y$ ausgibt. Der Differenzenbildner DFB gibt daher auf die Leitung Z ein Steuersignal, aufgrund dessen die Logik- und Speicherschaltung LGS die Anordnung auf «Koordinatenanwahl» schaltet. In dieser Betriebsweise arbeitet das Bedienelement, bestehend aus berührungsempfindlicher Platte TSD und Koordinatenermittler KEM, in bekannter Weise, es können Bildpunkte angewählt und dementsprechend Funktionen wie Bildwechsel, Aufbau von Bildern und dergleichen ausgelöst werden, sofern der Stift auf ein entsprechendes Feld aufgesetzt ist. Wird der Stift über den Bildschirm bewegt, werden fortlaufend die jeweiligen Koordinaten $x$, $y$ des Berührungspunktes dem Differenzenbildner DFB zugeführt, und aufgrund des auf die Leitung Z gegebenen Steuersignals schaltet die Logik- und Speicherschaltung LGS die Anordnung in den Betriebszustand «Bildrollen». Mit den Differenzen $\Delta x$, $\Delta y$ errechnet die Einheit GBK stets neue Grossbildkoordinaten $X_0$, $Y_0$, und der Adressenrechner ADR, der über die Leitung R freigegeben ist, errechnet Bildspeicheradressen, die in solcher Reihenfolge ausgelesen werden, dass ein Ausschnitt aus dem Grossbild mit dem Sichtgerät SG dargestellt wird. Dieser Auschnitt verschiebt sich in der Bewegungsrichtung des Stiftes über den Bildschirm, wobei Bildteile an der einen Seite des Bildschirmes verschwinden und auf der anderen Seite neue Bildteile erscheinen. Ist das Bild entsprechend der Stiftbewegung bzw. der Fingerbewegung verschoben und wird der gewünschte Bildausschnitt dargestellt, wird mit dem Stift an der erreichten Stelle ein kleiner Moment verweilt, so dass die Differenzen $\Delta x$, $\Delta y$ Null werden und die Logik-und Steuerschaltung LGS die Betriebsart «Bildrollen» abschaltet. Nach Abheben des Stiftes von der berührungsempfindlichen Platte wird die Betriebsart «Koordinatenanwahl» eingeschaltet.

Ist die Entfernung, um die der Bildausschnitt verschoben werden soll, gross, insbesondere grösser als die Bildschirmabmessung, dann wird der Rollvorgang – wie oben beschrieben – durch Bewegen des Stiftes eingeleitet. Auf der letzten Position wird jedoch nicht verharrt, sondern es wird der Stift sofort abgehoben, d.h., es wird eine Wischbewegung durchgeführt. In diesem Falle sind die Koordinatendifferenzen $\Delta x$, $\Delta y$ nicht über eine vorgegebene Zeit Null, sondern der Differenzenbildner DFB meldet der Logik- und Speichereinheit LGS über die Leitung Z, dass keine Koordinaten x, y mehr vorliegen. Das Bildrollen wird daher nicht gestoppt, sondern die Logik- und Speicherschaltung gibt weiterhin den Adressenrechner ADR frei und liest die letzten Koordinatendifferenzen $\Delta x$, $\Delta y$, die gespeichert wurden, an die Einheit GBK aus, welche weiterhin neue Grossbildkoordinaten $X_0$, $Y_0$ errechnet. Demgemäss wird der Bildausschnitt mit der Richtung und Geschwindigkeit der Wischbewegung weiterhin über das Grossbild bewegt. Wird der Stift wieder auf die berührungsempfindliche Platte aufgesetzt, werden Koordinatensignale x, y erzeugt, und, wenn der Stift nicht bewegt wird, sind die Koordinatendifferenzen $\Delta x$, $\Delta y$ Null, so dass das Bildrollen gestoppt wird.

**Patentansprüche**

1. Anordnung zum Verschieben von Zeichen auf dem Bildschirm eines Sichtgerätes mit einem Bildspeicher, in dem ein Grossbild gespeichert ist, von dem auf dem Bildschirm jeweils nur ein Ausschnitt darstellbar ist, und mit einem Bedienelement, mittels dessen der dargestellte Grossbildausschnitt verschoben werden kann, indem Adressen zum Auslesen von Bildspeicherzellen gebildet werden, in denen die den jeweiligen Bildausschnitt ergebenden Daten enthalten sind, gekennzeichnet, durch
a) ein an sich bekanntes Bedienelement, das bei Berühren des Bildschirms Signale abgibt, welche den Bildschirmkoordinaten des Berührungspunktes entsprechen, oder das am Bildschirm angebracht ist und das bei Berühren des Bedienelementes Bildschirmkoordinatensignale abgibt;
b) einen Differenzenbildner (DFB), welcher Signale ($\Delta x$, $\Delta y$) erzeugt, die der Differenz und der Änderungsgeschwindigkeit von aufeinanderfolgend erzeugten Koordinatensignalen entsprechen;
c) eine Adressiereinrichtung (GBK, ADR), die aus den Ausgangssignalen des Differenzenbildners (DFB) Bildspeicheradressen ($X_0$, $Y_0$) bildet, derart, dass der Bildausschnitt entsprechend der Änderung der Koordinaten des Berührungspunktes verschoben wird.
2. Anordnung nach Anspruch 1, dadurch gekennzeichnet, dass das Verschieben des Bildausschnitts gestoppt wird, wenn während einer vorgegebenen Zeitdauer die Koordinatensignale (x, y) sich nicht ändern.

3. Anordnung nach Anspruch 1 oder 2, dadurch gekennzeichnet, dass die jeweiligen Ausgangssignale des Differenzenbildners (DFB) in einer Logik- und Speichereinheit (LGS) gespeichert werden, aus der sie zyklisch an die Adressiereinrichtung (GBK) ausgelesen werden, solange kein Koordinatensignal (x, y) festgestellt wird.

4. Anordnung nach einem der Ansprüche 1 bis 3, gekennzeichnet durch zwei Betriebsarten, einer ersten, bei der der Bildausschnitt verschoben wird, und einer zweiten, in der ein Bildpunkt oder eine Gruppe von benachbarten Bildpunkten anwählbar ist, wobei die erste Betriebsart mit dem Auftreten von Änderungen der Berührungspunktkoordinaten (x, y) und die zweite Betriebsart nach Auftreten von mehreren gleichen Berührungspunktkoordinaten eingeschaltet wird.

5. Anordnung nach einem der Ansprüche 1 bis 4, dadurch gekennzeichnet, dass das Bedienelement eine berührungsempfindliche Platte (TSD) und eine an diese angeschlossene Koordinatenermittlungseinheit (KEM) aufweist, die bei dem durch das Berühren auf die Platte ausgeübten Druck die den Bildschirmkoordinaten des Berührungspunktes entsprechenden Signale abgibt.

6. Anordnung nach einem der Ansprüche 1 bis 4, dadurch gekennzeichnet, dass das Bedienelement an zwei Seiten des Bildschirms angeordnete Reihen von Strahlensendern enthält, die auf den jeweils gegenüberliegenden Bildschirmseiten angeordnete Reihen von Strahlenempfängern gerichtet sind, und dass beim Berühren des Bildschirms mindestens zwei sich kreuzende Strahlen unterbrochen werden.

7. Anordnung nach einem der Ansprüche 1 bis 4, dadurch gekennzeichnet, dass das Bedienelement eine Lichtgriffeleinheit ist.

**Claims**

1. Arrangement for displacing characters on the screen of a display unit with an image memory in which there is stored a large image, of which only one segment can be displayed on the screen at any one time, and with an operating element by means of which the displayed large image segment can be displaced, as addresses are formed to read out image memory cells in which the data producing the respective image segment is contained, characterised by
a) an operating element which is known per se and which when the screen is touched emits signals corresponding to the screen coordinates of the touch point or which is provided on the screen and which emits screen coordinate signals when the operating element is touched;
b) a difference former (DFB) which produces signals ($\Delta x$, $\Delta y$) which correspond to the difference and the rate of change of successively produced coordinate signals;
c) an addressing device (GBK, ADR) which establishes from the output signals of the difference former (DFB) image memory addresses ($X_0$, $Y_0$) such that the image segment is displaced in accordance with the change in the coordinates of the touch point.

2. Arrangement according to claim 1, characterised in that the displacement of the image segment is stopped if the coordinate signals (x, y) do not change during a given period of time.

3. Arrangement according to claim 1 or 2, characterised in that the respective output signals of the difference former (DFB) are stored in a logic and memory unit (LGS) from which they are read out cyclically to the addressing device (GBK) as long as no coordinate signal (x, y) is determined.

4. Arrangement according to one of the claims 1 to 3, characterised by two modes of operation, a first, in which the image segment are (sic) displaced, and a second, in which an image dot or a group of adjacent image dots can be selected, the first mode of operation being turned on with the occurrence of changes of the touch point coordinates (x, y) and the second mode of operation being turned on after the occurrence of several similar touch point coordinates.

5. Arrangement according to one of the claims 1 to 4, characterised in that the operating element has a touch-sensitive plate (TSD) and a coordinate determination unit (KEM) which is connected to the latter and which, when the pressure is exerted on the plate through touch, emits the signals corresponding to the screen coordinates of the touch point.

6. Arrangement according to one of the claims 1 to 4, characterised in that the operating element contains series of beam transmitters which are arranged on two sides of the screen and which are directed at the series of beam receivers arranged on the respectively opposite sides of the screen and in that when the screen is touched at least two crossing beams are interrupted.

7. Arrangement according to one of the claims 1 to 4, characterised in that the operating element is a light-pen unit.

## Revendications

1. Dispositif pour déplacer des signes sur l'écran d'un visuel, comprenant une mémoire d'image, dans laquelle est stocké un grand plan dont seulement une partie ou coupe peut être représentée chaque fois sur l'écran, ainsi qu'un élément de commande au moyen duquel la coupe représentée du grand plan peut être déplacée, par le fait que des adresses pour la lecture de cellules de la mémoire d'image sont formées, cellules dans lesquelles sont contenues les données fournissant la coupe concernée, caractérisé par
a) un élément de commande en lui-même connu, qui délivre, lors de l'attouchement de l'écran, des signaux correspondant aux coordonnées d'écran du point d'attouchement, ou qui est disposé sur l'écran et délivre, lors de l'attouchement de l'élément de commande, des signaux correspondant à des coordonnées d'écran;
b) un différenciateur (DFB) générant des signaux ($\Delta$x, $\Delta$y) qui correspondent à la différence et à la vitesse de changement de signaux de coordonnées générés les uns à la suite des autres; et
c) un dispositif d'adressage (GBK, ADR), formant des adresses de la mémoire d'image ($X_0$, $Y_0$) à partir des signaux de sortie du différenciateur (DFB), de manière que la coupe soit déplacée conformément au changement des coordonnées du point d'attouchement.

2. Dispositif selon la revendication 1, caractérisé en ce que le déplacement de la coupe est arrêté lorsque les signaux de coordonnées (x, y) ne changent pas pendant une durée préfixée.

3. Dispositif selon la revendication 1 ou 2, caractérisé en ce que les signaux de sortie du différenciateur (DFB) sont mémorisés dans une unité logique et de mémoire (LGS), dans laquelle ils sont lus cycliquement pour être transférés au dispositif d'adressage (GBK) tant qu'aucun signal de coordonnées (x, y) n'est détecté.

4. Dispositif selon une des revendications 1 à 3, caractérisé par deux modes de fonctionnement, un premier mode dans lequel la coupe est déplacée et un second mode dans lequel peut être sélecté un point d'image ou un groupe de points d'image voisins, le premier mode étant enclenché à l'apparition de changements des coordonnées (x, y) du point d'attouchement et le second mode étant enclenché après l'apparition de plusieurs coordonnées identiques du point d'attouchement.

5. Dispositif selon une des revendications 1 à 4, caractérisé en ce que l'élément de commande comprend une plaque (TSD) sensible à l'attouchement et une unité de détermination de coordonnées (KEM) raccordée à cette plaque et qui, sous l'effet de la pression exercée sur la plaque lors de l'attouchement, délivre des signaux correspondant aux coordonnées d'écran du point d'attouchement.

6. Dispositif selon une des revendications 1 à 4, caractérisé en ce que l'élément de commande comprend des rangées d'émetteurs de rayons disposés sur deux côtés de l'écran et dirigés vers des rangées de récepteurs de rayons disposés sur les côtés opposés de l'écran, et que l'attouchement de l'écran provoque la coupure d'au moins deux rayons qui se croisent.

7. Dispositif selon une des revendications 1 à 4, caractérisé en ce que l'élément de commande est une unité à rayon lumineux.